# EUROPÄISCHE PATENTANMELDUNG

(11) **EP 0 656 254 A1**
(43) Veröffentlichungstag der Anmeldung: **07.06.1995**
(21) Anmeldenummer: 94116946.8
(22) Anmeldetag: 26.10.1994
(51) Int. Cl.: B32B 7/08, D04H 13/00, D06N 5/00, B32B 5/26, B32B 33/00

(54) **Textiler Verbundstoff, Verfahren zu dessen Herstellung und dessen Verwendung**

(30) Priorität: 06.11.1993 DE 4337984; 14.03.1994 DE 4408492
(71) Anmelder: HOECHST AKTIENGESELLSCHAFT, D-65929 Frankfurt am Main (DE)
(72) Erfinder: Zalewski, Edwin, D-86399 Bobingen (DE); Zerfass, Karl-Christian, D-86399 Bobingen (DE)

(57) **Zusammenfassung**

Beschrieben wird ein Verbundstoff umfassend wenigstens ein textiles Flächengebilde (2) bestehend aus Fasern aus synthetischen Polymeren und wenigstens ein textiles Flächengebilde aus anorganischen Fasern (1), dessen textilen Flächengebilde durch Garne miteinander verbunden sind.

Die Verbindung der textilen Flächengebilde erfolgt vorzugsweise durch Nähen, Wirken oder Nähwirken.
Der Verbundstoff läßt sich insbesondere als Trägereinlage für die Herstellung von Dachbahnen einsetzen.

## Beschreibung

Die Erfindung betrifft einen textilen Verbundstoff, der sich insbesondere als Trägereinlage zur Herstellung von Dachbahnen oder als Plane eignet.

Textile Verbundstoffe zur Herstellung von Dachbahnen müssen vielfältigen Anforderungen genügen. So ist einerseits eine ausreichende mechanische Stabilität gefordert, wie gute Perforationsfestigkeit und gute Zugfestigkeit, um beispielsweise den mechanischen Belastungen bei der Weiterverarbeitung, wie Bituminierung oder Verlegen, standzuhalten. Außerdem wird eine hohe Beständigkeit gegen thermische Belastung, beispielsweise beim Bituminieren oder gegen strahlende Wärme, und Widerstandsfähigkeit gegen Flugfeuer verlangt. Es hat daher nicht an Versuchen gefehlt, bestehende textile Verbundstoffe zu verbessern.

Es ist bekannt, Vliesstoffe auf der Basis von Synthesefasern mit Glasvliesen zu kombinieren. Beispiele für solche Trägereinlagen finden sich in den GB-A-1,517,595, DE-Gbm-77-39,489, EP-A-160,609, EP-A-176,847, EP-A-403,403 und EP-A-530,769.

Es ist ferner bekannt, Verbundstoffe durch Wirk- oder Nähwirktechniken herzustellen. Beispiele dafür finden sich in den DE-A-3,347,280, US-A-4,472,086, EP-A-333,602 und EP-A-395,548. Durch Wirk- oder Nähwirktechniken miteinander verbundene Kombinationen von textilen Flächengebilden auf der Basis von synthetischen Fasern mit textilen Flächengebilden auf der Basis von Glasfasern sind in diesen Publikationen nicht beschrieben.

Aus der EP-A-208,918 sind Verbundstoffe zur Herstellung von Trägereinlagen für Dachbahnen bekannt, die ein hitzestabilisiertes und mechanisch verfestigtes Netzwerk aus hochfesten Polyesterfilamentgarnen enthalten. Beschrieben werden Verbundstoffe aus Polyestervliesen und einem Netzwerk von hochfesten Polyesterfilamentgarnen, die mittels Kettwirktechnik in das Polyestervlies eingearbeitet sind. Eine weitere Ausführungsform dieser vorbekannten Verbundstoffe enthält ein Glasvlies, das auf den Verbundstoff aufgeklebt ist. Diese Verbundstoffe zeichnen sich durch eine geschlossene Glasvliesoberfläche aus. Es hat sich jedoch herausgestellt, daß die Verbindung des Glasvlieses mit dem restlichen Verbundstoff eine gewisse Delaminierungsneigung aufweist.

Mit der vorliegenden Erfindung werden Verbundstoffe bereitgestellt, die sich durch eine verbesserte Kombination von Eigenschaften auszeichnen. Dies äußert sich in einer verbesserten Produktivität bei der Herstellung dieser Verbunde, einer verbesserten Weiterverarbeitung und verbesserten Gebrauchseigenschaften. Die erfindungsgemäßen Verbundstoffe zeichnen sich insbesondere durch hohe Beständigkeit gegen Flugfeuer und strahlende Wärme, hohe Perforationsfestigkeit, hohe Zugfestigkeit und geringe Delaminierungsneigung aus.

Die vorliegende Erfindung betrifft Verbundstoffe umfassend wenigstens ein textiles Flächengebilde aus Fasern aus synthetischen Polymeren und wenigstens ein textiles Flächengebilde aus anorganischen Fasern, vorzugsweise aus Glasfasern, welche textilen Flächengebilde durch Garne, bevorzugt durch Garne mit einer Festigkeit von mindestens 50 cN/tex, insbesondere von mehr als 60 cN/tex, miteinander verbunden sind.

Der Begriff "textiles Flächengebilde" ist im Rahmen dieser Beschreibung in seiner breitesten Bedeutung zu verstehen. Dabei kann es sich um alle Gebilde aus Fasern aus synthetischen Polymeren oder aus anorganischen Fasern handelt, die nach einer flächenbildenden Technik hergestellt worden sind. Beispiele für solche Gebilde sind Gewebe, Maschenwaren, wie Gestricke und Vorzugsweise Gelege, Gewirke und insbesondere Vliese.

Von den Vliesen aus Fasern aus synthetischen Polymeren sind Spinnvliese besonders bevorzugt.

Von den Vliesen aus anorganischen Fasern und insbesondere aus Glasfasern sind solche besonders bevorzugt, die durch Naßlegetechniken hergestellt worden sind.

Die textilen Flächengebilde aus Fasern aus synthetischen Polymeren zur Herstellung der erfindungsgemäßen Verbundstoffe weisen üblicherweise Flächengewichte von 20 bis 200 g/m² auf, vorzugsweise 40 bis 100 g/m².

Die textilen Flächengebilde aus anorganischen Fasern, insbesondere aus Glasfasern zur Herstellung der erfindungsgemäßen Verbundstoffe weisen üblicherweise Flächengewichte von 30 bis 100 g/m² auf, vorzugsweise 40 bis 50 g/m².

Besonders bevorzugt werden Glasvliese, die mit einem schwer entflammbaren Bindemittel, wie z.B. Melamin-Formaldehyd oder Harnstoffharz, verfestigt worden sind.

Zur Herstellung der textilen Flächengebilde aus Fasern aus synthetischen Polymeren lassen sich ganz allgemein Fasern aus synthetischen fadenbildenden Polymeren oder Mischungen aus solchen Fasern einsetzen. Beispiele für geeignete synthetische Polymere sind Polyamide, wie Nylon- oder Perlon-Typen, Aramide oder bevorzugt Polyester, insbesondere Polyethylenterephthalat. Unter dem Begriff Polyethylenterepthalat sind auch Copolymere zu verstehen, die wiederkehrende Polyethylenterephtalateinheiten aufweisen.

Zur Herstellung der textilen Flächengebilde aus anorganischen Fasern lassen sich beispielsweise Steinwolle, Asbest, Kohlenstofffasern, Stahlfasern, Keramikfasern und besonders bevorzugt Glasfasern oder Mischungen aus solchen Fasern einsetzen.

Die erfindungsgemäßen Verbundstoffe können aus zwei oder mehr als zwei Schichten bestehen. Vorzugsweise bestehen diese Verbundstoffe aus zwei Schichten. Vielschichtige Typen weisen vorzugsweise an mindestens einer der Außenseiten ein textiles Flächengebilde aus anorganischen Fasern, insbesondere aus Glasfasern auf.

Die Verbindung der einzelnen Schichten miteinander erfolgt auf mechanische Art und Weise mittels Garnen.

Es können beliebige Verbindungstechniken herangezogen werden, solange diese eine mechanische Verbindung der textilen Flächengebilde mit dem Verbindungsgarn gestatten. Beispiele für bevorzugte Verbindungstechniken sind Nähen, Wirken oder Nähwirken.

Als Verbindungsgarne eignen sich alle Garne, vorzugsweise hochfeste Garne aus anorganischen Fasern und insbesondere Garne aus synthetischen Polymeren. Unter hochfesten Garnen sind im Rahmen dieser Beschreibung Garne mit einer Festigkeit von mindestens 50 cN/tex zu verstehen.

Als anorganische Fasermaterialien, aus denen die Garne bestehen können, lassen sich die weiter oben für die Herstellung der textilen Flächengebilde beschriebenen anorganischen Fasermaterialien einsetzen.

Neben diesen anorganischen Fasermaterialien lassen sich insbesondere synthetische Polymere als Fasermaterialien für die Garne einsetzen, aus denen hochfeste Fasern hergestellt werden können. Beispiele für derartige synthetische Polymere sind Poly-a-olefine, wie Polyethylen, Polyetherketone, Polyphenylensulfide, Polybenzimidazole, Aramide, Polyamide, Polyacrylnitrile (oxidierte und nicht-oxidierte Typen) und vorzugsweise Polyester, insbesondere Polyethylenterephthalat.

Als synthetische Polymere, aus denen die bevorzugten Garne bestehen, eignen sich die weiter oben für die Herstellung der textilen Flächengebilde beschriebenen synthetischen Polymere. Bevorzugt sind hier ebenfalls hochfeste Polyestergarne.

Bei den Verbindungsgarnen kann es sich um Stapelfasergarne oder insbesondere um Filamentgarne handeln.

Die Einzelfilamente in diesen Garnen weisen in der Regel einen Titer von 4 bis 7 dtex auf, vorzugsweise 5 bis 6 dtex.

Die Garntiter bewegen sich in der Regel im Bereich von 80 bis 2200 dtex, vorzugsweise 1100 bis 1670 dtex.

Es lassen sich auch Mischgarne einsetzen.

Die Verbindung der einzelnen Schichten des Verbundstoffes erfolgt üblicherweise durch Nähen oder vorzugsweise durch Wirken oder Nähwirken.

Die Menge des einzusetzenden Verbindungsgarnes kann dabei - je nach angewandter Verbindungstechnik, eingesetztem textilem Flächengebilde und gewünschtem mechanischem Eigenschaftprofil des Verbundstoffes - in weiten Bereichen variiert werden. Üblicherweise wird das Verbindungsgarn in einer solchen Menge eingesetzt, so daß es mit einem Flächengewicht von 4 bis 150 g/m², vorzugsweise 6 bis 90 g/m² im Verbundstoff vorliegt.

Zu den bevorzugten Verbindungstechniken zählt das Nähwirken, insbesondere das Malimo- oder das Maliwatt-Verfahren.

Zu den besonders bevorzugten Verbindungstechniken zählen das Kettwirken, insbesondere das Rascheln, und davon besonders bevorzugt das Schußlegerascheln. Unter Schußlegerascheln oder auch Rascheln mit Schußeintrag ist im Rahmen dieser Erfindung eine Verbindungstechnik zu verstehen, bei der zusätzlich zu den textilen Flächengebilden Kett- und Schußfäden vorgelegt werden, die im Anschluß daran mit Maschenfäden verbunden werden.

Die erhaltenen Verbundstoffe zeichnen sich durch hohe Zugfestigkeit, durch Schwerentflammbarkeit und durch geringe Delaminierungstendenzen aus.

Insbesondere durch Nähwirken und Kettwirken lassen sich Verbundstoffe mit besonders isotropen mechanischen Eigenschaften herstellen.

Die erfindungsgemäßen Verbundstoffe weisen üblicherweise Zugfestigkeiten von mindestens 800 N/5 cm Breite auf, vorzugsweise Zugfestigkeiten von mehr als 1000 N/5 cm Breite.

Die erfindungsgemäßen Verbundstoffe können in an sich bekannter Weise zu Bitumenbahnen verarbeitet werden. Die mit diesen Bitumenbahnen hergestellten Probedächer erfüllen die Anforderungen der bekannten europäischen Brandtests, wie DIN 4102, Teil 7 (Deutschland); Nordtest 6 (Schweden); und T 30 (Frankreich).

Die erfindungsgemäßen Verbundstoffe weisen üblicherweise einen Delaminierungswiderstand von mehr als 10 N/5 cm auf.

Die Perforationsfestigkeit der erfindungsgemäßen Verbundstoffe auf der Basis von Vliesen ist überraschend hoch. Werte von größer als 15 kg, entsprechend Klasse L3 nach den UEAtc-Basisrichtlinien; Abschnitt 5.1.9, lassen sich problemlos erreichen. Bei entsprechendem Aufbau des erfindungsgemäßen Verbundstoffes, z.B. durch Erhöhung der Flächenmasse des textilen Flächengebildes aus Fasern aus synthetischen Polymeren, sind Werte von mehr als 25 kg, entsprechend Klasse L4, zu erreichen.

Die erfindungsgemäßen Verbundstoffe zeichnen sich durch eine hohe Flexibilität aus.

Das Flächengewicht der erfindungsgemäßen Verbundstoffe beträgt üblicherweise 140 bis 250 g/m²,vorzugsweise 160 bis 200 g/m².

Durch die beschriebenen Verbindungstechniken ist es möglich, die erfindungsgemäßen Verbundstoffe mit hoher Produktionsgeschwindigkeit herzustellen. Die Erfindung betrifft daher auch ein Verfahren zur Herstellung der erfindungsgemäßen Verbundstoffe.

Das Verfahren umfaßt die Maßnahmen:
a) Zusammenführen wenigstens eines textilen Flächengebildes aus Fasern aus synthetischen Polymeren und wenigstens eines textilen Flächengebildes aus anorganischen Fasern, insbesondere aus Glasfasern, so daß sich ein Schichtstoff ausbildet, und
b) Verbinden der einzelnen textilen Flächengebilde durch Nähen, Wirken oder Nähwirken des Schichtstoffes unter Verwendung von Garnen, insbesondere von Garnen mit einer Festigkeit von mindestens 50 cN/tex, insbesondere von mehr als 60 cN/tex.

Das Vernähen der einzelnen Schichten des Verbundstoffes kann mit an sich bekannten Vorrichtungen erfolgen, beispielsweise mit einer Steppmaschine.

Die Verbindung der einzelnen Schichten des Verbundstoffes durch Nähwirken kann mit an sich bekannten Vorrichtungen erfolgen. Beispiele dafür sind die Malimo- oder die Maliwatt Maschine.

Die Verbindung der einzelnen Schichten des Verbundstoffes durch Wirken kann mit an sich bekannten Vorrichtungen erfolgen. Dabei handelt es sich üblicherweise um Kettwirkmaschinen, vorzugsweise um Raschelmaschinen. Beispiele dafür sind die Hochleistungs-Magazinschuß-Raschelmaschine mit Vliesvorlage des Typs RS 3 MSU-V der Firma Karl Mayer Textilmaschinenfabrik GmbH, Obertshausen oder der Kettenwirkautomat mit horizontal einlaufendem Verbundmaterial des Typs COPCENTRA HV der Firma LIBA-Maschinenfabrik GmbH, Naila.

Die erfindungsgemäßen Verbundstoffe lassen sich vorteilhaft als Trägereinlagen für die Herstellung von Dachbahnen oder als Planen einsetzen.

Zur Herstellung von Dachbahnen werden die Verbundstoffe in an sich bekannter Weise z.B. mit Bitumen oder mit Polyvinylchlorid imprägniert und/oder beschichtet.

Die Verbundstoffe lassen sich aber auch auf anderen Gebieten einsetzen, wo neben einer hohen Perforationsbeständigkeit hohe Zugfestigkeiten verlangt werden. Beispiele dafür sind der Einsatz als Geotextilien oder als Planen.

Die folgenden Beispiele erläutern die Erfindung ohne diese zu begrenzen.

Beispiel 1: Es wurde ein Vliesverbundstoff durch Vermaschen eines Spinnvlieses aus Filamenten aus Polyethylenterephthalat mit einem Flächengewicht von 60 g/m² und eines naßgelegten und durch Zusatz eines Bindemittels schwer entflammbar gemachten Glasfaservlieses mit einem Flächengewicht von 40 g/m² mit einem Garn aus Polyethylenterephthalatfäden einer Festigkeit von 60 cN/tex und einem Garntiter von 1100 dtex hergestellt. Das Flächengewicht des Garns im Verbundstoff betrug 90 g/m².

Der erhaltene Verbundstoff wies folgende Eigenschaften auf:
Flächenmasse: 190 g/m² (ermittelt nach DIN 53 854)
Perforationsfestigkeit: größer als 25 kg (entsprechend Klasse L4 der UEAtc-Basisrichtlinien)
Dimensionsstabilität: kleiner als 0,5 % (ermittelt durch Verformung eines liegenden Prüflings bei 200°C Heißluft; 10 min; Mustergröße 35/35 cm; Meßbereich 25/25 cm)
Brandverhalten (Flugfeuer und strahlende Wärme): bituminierte Bahn besteht den Brandtest nach DIN 4102, Teil 7
Festigkeit: größer gleich 1000 N/5 cm in Kette und Schußrichtung (ermittelt nach DIN 53 857, Teil 2)
Beispiel 2: Es wurde ein Vliesverbundstoff durch Vermaschen eines Gewebes aus Polyethylenterephthalat-Filamenten und eines naßgelegten und durch Zusatz eines Bindemittels schwer entflammbar gemachten Glasfaservlieses mit einem Flächengewicht von 40 g/m² mit einem Garn aus Polyethylenterephthalatfäden einer Festigkeit von 60 cN/tex und einem Garntiter von 80 dtex hergestellt. Das Gewebe aus Polyethylenterephthalat-Filamenten wies jeweils 3 Fäden/cm in Kett- und Schußrichtung auf. Der Garntiter der Fäden betrug jeweils 1100 dtex und deren Festigkeit betrug 72 cN/tex.

Der erhaltene Verbundstoff wies folgende Eigenschaften auf:
Flächenmasse: 110 - 120 g/m² (ermittelt nach DIN 53 854)
Perforationsfestigkeit: größer gleich 15 kg (entsprechend Klasse L3 der UEAtc-Basisrichtlinien)
Dimensionsstabilität: kleiner als 0,5 % (ermittelt wie in Beispiel 1)
Brandverhalten (Flugfeuer und strahlende Wärme): bituminierte Bahn besteht den Brandtest nach DIN 4102, Teil 7
Festigkeit: größer gleich 1000 N/5 cm in Kette und Schußrichtung (ermittelt wie in Beispiel 1).

Beispiel 3: Es wurde ein Vliesverbundstoff durch Vermaschen eines Gewebes aus Polyethylenterephthalat-Filamenten und eines naßgelegten und durch Zusatz eines Bindemittels schwer entflammbar gemachten Glasfaservlieses mit einem Flächengewicht von 40 g/m² mit einem Garn aus Polyethylenterephthalatfäden einer Festigkeit von 60 cN/tex und einem Garntiter von 80 dtex hergestellt. Das Gewebe aus Polyethylenterephthalat-Filamenten wies jeweils 9 Fäden/cm in Kett- und Schußrichtung auf. Der Garntiter der Fäden betrug jeweils 1100 dtex und deren Festigkeit betrug 72 cN/tex.

Der erhaltene Verbundstoff wies folgende Eigenschaften auf:
Flächenmasse: 250 g/m² (ermittelt nach DIN 53 854)
Perforationsfestigkeit: größer gleich 25 kg (entsprechend Klasse L4 der UEAtc-Basisrichtlinien)
Dimensionsstabilität: kleiner als 0,5 % (ermittelt wie in Beispiel 1).

Brandverhalten (Flugfeuer und strahlende Wärme): bituminierte Bahn besteht den Brandtest nach DIN 4102, Teil 7
Festigkeit: größer gleich 31000 N/5 cm in Kette und Schußrichtung (ermittelt wie in Beispiel 1).

## Patentansprüche

1. Verbundstoff umfassend wenigstens ein textiles Flächengebilde aus Fasern aus synthetischen Polymeren und wenigstens ein textiles Flächengebilde aus anorganischen Fasern, welche textilen Flächengebilde durch Garne miteinander verbunden sind.

2. Verbundstoff nach Anspruch 1, dadurch gekennzeichnet, daß es sich bei den anorganischen Fasern um Glasfasern handelt.

3. Verbundstoff nach Anspruch 1, dadurch gekennzeichnet, daß es sich bei den Garnen um Garne aus anorganischen Fasern oder insbesondere um Garne aus synthetischen Polymeren handelt.

4. Verbundstoff nach Anspruch 1, dadurch gekennzeichnet, daß es sich bei den Garnen um Garne mit einer Festigkeit von mindestens 50 cN/tex, insbesondere von mehr als 60 cN/tex, handelt.

5. Verbundstoff nach Anspruch 1, dadurch gekennzeichnet, daß das textile Flächengebilde aus Fasern aus synthetischen Polymeren ein Gelege, ein Gewirke oder ein Vlies, insbesondere ein Spinnvlies, ist.

6. Verbundstoff nach Anspruch 1, dadurch gekennzeichnet, daß das textile Flächengebilde aus Fasern aus synthetischen Polymeren Polyesterfasern, insbesondere Polyethylenterephthalatfasern, enthält.

7. Verbundstoff nach Anspruch 1, dadurch gekennzeichnet, daß das textile Flächengebilde aus Fasern aus synthetischen Polymeren ein Flächengewicht von 20 bis 200 g/m², insbesondere 40 bis 100 g/m², aufweist.

8. Verbundstoff nach Anspruch 1, dadurch gekennzeichnet, daß das textile Flächengebilde aus anorganischen Fasern ein Vlies, insbesondere ein naßgelegtes Glasfaservlies, ist.

9. Verbundstoff nach Anspruch 1, dadurch gekennzeichnet, daß das textile Flächengebilde aus anorganischen Fasern, insbesondere aus Glasfasern ein Flächengewicht von 30 bis 100 g/m² aufweist.

10. Verbundstoff nach Anspruch 1, dadurch gekennzeichnet, daß die Garne aus synthetischen Polymeren aus Polyester, insbesondere aus Polyethylenterephthalat, bestehen.

11. Verbundstoff nach Anspruch 1, dadurch gekennzeichnet, daß die Garne aus synthetischen Polymeren aus Polyester in einer Menge von 4 bis 150 g/m² im Verbundstoff vorhanden sind.

12. Verbundstoff nach Anspruch 1, dadurch gekennzeichnet, daß dieser eine Zugfestigkeit von mehr als 1000 N/5 cm aufweist.

13. Verbundstoff nach Anspruch 1, dadurch gekennzeichnet, daß die textilen Flächengebilde durch Raschein oder Nähwirken, insbesondere durch Schußlegerascheln, miteinander verbunden sind.

14. Verbundstoff nach Anspruch 1, dadurch gekennzeichnet, daß es sich bei dem textilen Flächengebilde aus Fasern aus synthetischen Polymeren um ein Vlies aus Polyesterfasern handelt und bei dem textilen Flächengebilde aus anorganischen Fasern um ein Glasvlies handelt, welche textilen Flächengebilde durch Rascheln, Nähwirken oder Nähen, insbesondere durch Schußlegerascheln, miteinander verbunden sind.

15. Verbundstoff nach Anspruch 1, dadurch gekennzeichnet, daß es sich bei dem textilen Flächengebilde aus Fasern aus synthetischen Polymeren um ein Gewebe oder ein Gelege aus Polyesterfasern handelt und bei dem textilen Flächengebilde aus anorganischen Fasern um ein Glasvlies handelt, welche textilen Flächengebilde durch Rascheln, Nähwirken oder Nähen miteinander verbunden sind.

16. Verfahren zur Herstellung von Verbundstoffen nach Anspruch 1 umfassend die Maßnahmen:
a) Zusammenführen wenigstens eines textilen Flächengebildes aus Fasern aus synthetischen Polymeren und wenigstens eines textilen Flächengebildes aus anorganischen Fasern, so daß sich ein Schichtstoff ausbildet, und
b) Verbinden der einzelnen textilen Flächengebilde durch Nähen, Wirken oder Nähwirken des Schichtstoffes unter Verwendung von Garnen, bevorzugt von Garnen mit einer Festigkeit von mindestens 50 cN/tex, insbesondere von mehr als 60 cN/tex.

17. Verfahren nach Anspruch 16, dadurch gekennzeichnet, daß es sich bei den anorganischen Fasern um Glasfasern handelt.

18. Verfahren nach Anspruch 16, dadurch gekennzeichnet, daß es sich bei den Garnen um Garne aus anorganischen Fasern oder insbesondere um Garne aus synthetischen Polymeren handelt.

19. Verfahren nach Anspruch 16, dadurch gekennzeichnet, daß es sich bei den textilen Flächengebilden aus Fasern aus synthetischen Polymeren und bei den textilen Flächengebilden aus anorganischen Fasern jeweils um Vliese handelt, und daß die Verbindung des Schichtstoffes durch Rascheln, Nähwirken oder Nähen erfolgt.

20. Verfahren nach Anspruch 19, dadurch gekennzeichnet, daß die Vliese jeweils Flächengewichte von 20 bis 200 g/m², vorzugsweise von 40 bis 100 g/m², aufweisen.

21. Verfahren nach Anspruch 16, dadurch gekennzeichnet, daß es sich bei den textilen Flächengebilden aus Fasern aus synthetischen Polymeren um Gewebe oder Gelege und bei den textilen Flächengebilden aus anorganischen Fasern um Vliese handelt, und daß die Verbindung des Schichtstoffes durch Rascheln, Nähwirken oder Nähen erfolgt.

22. Verwendung der Verbundstoffe nach Anspruch 1 als Trägereinlagen für die Herstellung von Dachbahnen oder als Planen.
